## Europäisches Patentamt

## European Patent Office

## Office européen des brevets

(11) Numéro de publication: **0 054 480**
**B1**

(12) **FASCICULE DE BREVET EUROPEEN**

(45) Date de publication du fascicule du brevet: **17.04.85**

(21) Numéro de dépôt: **81401963.4**

(22) Date de dépôt: **09.12.81**

(51) Int. Cl.⁴: **F 16 D 66/02**

(54) Dispositif indicateur d'usure des garnitures de freins à disque.

(30) Priorité: **16.12.80 FR 8026686**

(43) Date de publication de la demande:
**23.06.82 Bulletin 82/25**

(45) Mention de la délivrance du brevet:
**17.04.85 Bulletin 85/16**

(84) Etats contractants désignés:
**DE GB IT**

(56) Documents cités:
**EP-A-0 026 137**
**FR-A-1 470 689**
**FR-A-2 041 433**
**FR-A-2 138 897**
**FR-A-2 399 576**
**US-A-3 986 164**

(73) Titulaire: **ABEX PAGID EQUIPEMENT S.A.**
**Société anonyme dite:**
**9, rue Klock**
**F-92112 Clichy (FR)**

(72) Inventeur: **Pomes, Guy Roland**
**Les Effaloises Route de Longueil Annel**
**F-60150 Thourotte (FR)**

(74) Mandataire: **Moulines, Pierre et al**
**Cabinet BEAU de LOMENIE 55, rue**
**d'Amsterdam**
**F-75008 Paris (FR)**

Courier Press, Leamington Spa, England.

## Description

La présente invention a pour objet un dispositif indicateur d'usure des garnitures de freins à disque.

On connaît des dispositifs indicateurs d'usure de garnitures de freins qui sont constitués d'un élément en matière isolante dans lequel est noyé un organe conducteur relié au circuit électrique de signalisation. Ces dispositifs sont rapportés sur la plaquette de support de garniture de friction et sont indépendants de la plaquet de frein. Ce procédé permet de supprimer des opérations supplémentaires de fabrication des plaquettes de freins telles que:

— Perçage de la garniture de frein
— encollage d'un fil
— mis en place du fil sur la plaquette.

Il est également possible de récupérer un témoin d'usure s'il n'a pas été détérioré dans le cas d'un changement prématuré des plaquettes de frein.

Par ailleurs, il est connu d'utiliser des freins à disque dans lesquels le piston actionnant les plaquettes des garnitures de frein, présente un alésage central.

La présente invention a pour but d'utiliser un tel piston creux, pour faciliter le montage d'un témoin d'usure sur une plaquette de support d'une garniture de friction.

Le document US—A—3.986.164 montre déjà un dispositif indicateur d'usure des garnitures de freins à disque dans lesquels au moins l'une des plaquettes de support d'une garniture de friction est en appui contre l'une des faces d'un piston creux actionnant les garnitures, ledit dispositif comportant un témoin d'usure constitué d'un élément en matière isolante dans lequel est noyé un organe conducteur relié au circuit électrique de signalisation, l'élément en matière isolante du témoin d'usure étant en appui contre la plaquette de support et étant prolongé par un organe de verrouillage disposé entre le piston et la plaquette de support, ledit organe assurant un verrouillage axial et vertical de l'élément.

Par le document FR—A—2.138.897, il est également connu que l'élément en matière isolante est en appui contre la plaquette de support sur la face située du côté de la garniture de friction.

Toutefois, ces dispositifs ne comportent pas de moyens de verrouillage efficace.

Conformément à la présente invention, l'élément en matière isolante est en appui contre la face de la plaquette de support située du côté de la garniture de friction, et ledit organe de verrouillage est disposé entre la face intérieure de l'alésage central du piston creux et le bord supérieur de la plaquette de support.

Avec ce dispositif, le témoin d'usure accroché sur la plaque de support de la garniture de friction se trouve verrouillé contre la face intérieure du piston creux de l'étrier de frein, sans modification ou adaptation particulière des autres éléments de l'étrier de frein tels que ressort, goupille ou clip. Ce dispositif permet également une grande latitude d'orientation du témoin d'usure définie par la périphérie de l'alésage central du piston creux.

D'autres caractéristiques et avantages de l'invention seront mieux compris à la lecture de la description qui va suivre d'un mode de réalisation et en se référant aux dessins annexés, sur lesquels:

— la figure 1 est une vue en coupe radiale d'un frein à disque muni d'un dispositif indicateur d'usure de garniture suivant la présente demande;
— la figure 2 est une vue en coupe suivant la ligne II—II de la figure 1;
— la figure 3 est une vue en élévation montrant le témoin d'usure par rapport au piston.

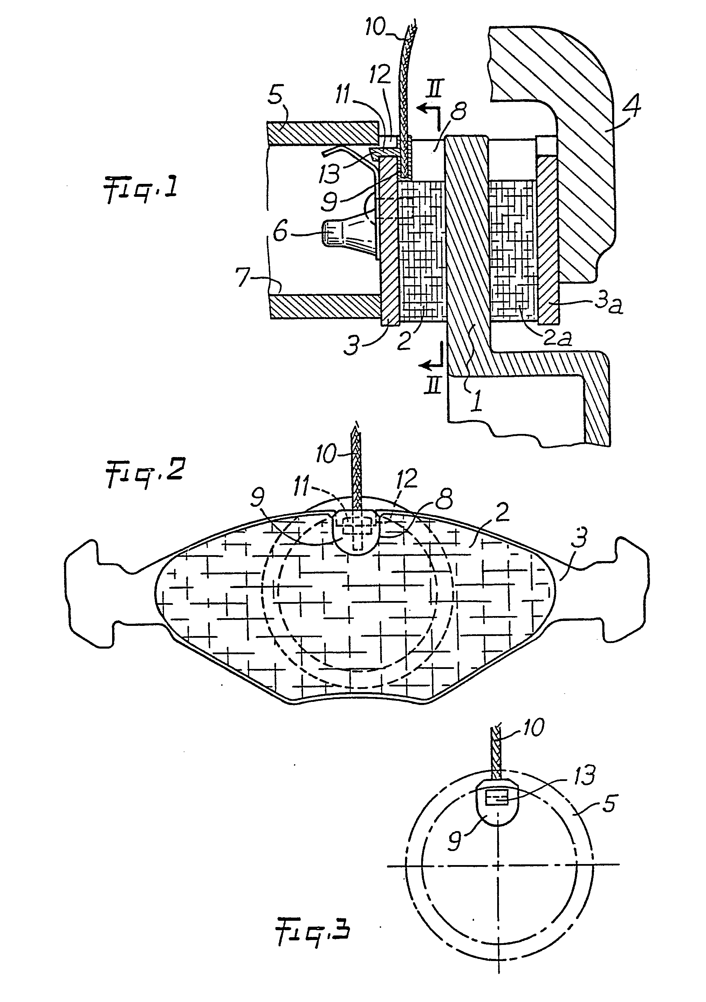

A la figure 1 on a représenté un disque de frein 1 qui est disposé entre deux plaquettes de freinage constituées chacune d'une garniture de friction 2, 2a fixée sur une plaquette de support 3, 3a. L'une des plaquettes de support 3a est en appui contre un étrier 4 de frein et l'autre plaquette 2 est soumise à la force de pression d'un piston creux 5 (figures 1 et 2) actionné de façon connue par un fluide. La plaquette de support 3 est maintenue par un élément élastique 6 en appui contre la surface d'un alésage 7 ménagé à l'intérieur du piston 5.

La garniture de friction 2 présente sur son bord supérieur un logement 8 dans lequel est engagé un témoin d'usure qui est constitué d'un élément en matière isolante 9 dans lequel est noyée l'extrémité d'un fil conducteur 10 (figures 1, 2, 3) relié à un circuit électrique de signalisation non représenté au dessin. L'élément en matière isolante 9 du témoin d'usure est prolongé par un doigt 11 engagé dans une échancrure 12 ménagée dans la plaque de support 3, ledit doigt présentant à son extrémité un bossage 13 s'étendant à l'intérieur de l'alésage 7 du piston 5 et en appui contre la plaquette de support 3. De cette manière le bossage 13 est maintenu verrouillé en hauteur par la paroi de l'alésage 7 du piston contre lequel il est susceptible de venir en butée si un déplacement quelconque du doigt 11 dans l'échancrure 12 venait à se produire.

Ce dispositif permet une grande latitude d'orientation du témoin d'usure 9 définie par la périphérie de l'alésage 7 du piston 5.

## Revendications

1. Dispositif indicateur d'usure des garnitures (2, 2a) de freins à disque dans lesquels au moins l'une des plaquettes de support (3) d'une garniture de friction est en appui contre l'une des faces d'un piston creux (5) actionnant les garnitures, ledit dispositif comportant un témoin d'usure constitué d'un élément (9) en matière isolante dans lequel est noyé un organe conducteur (10) relié au circuit électrique de signalisation, l'élément (9) en matière isolante du témoin d'usure étant en appui contre la plaquette de support (3) et étant prolongé par un organe de verrouillage (11, 13) disposé entre le piston (5) et la plaquette de support (3), ledit organe assurant un verrouillage axial et vertical de l'élément (9), caractérisé en ce que ledit élément (9) en matière isolante est en appui contre la face de la plaquette de support (3) située du côté de la garniture de friction (2), et en ceque ledit organe de verrouillage (11, 13) est disposé entre la face intérieure de l'alésage central (7) du piston creux (5) et le bord supérieur de la plaquette de support (3).

2. Dispositif suivant la revendication 1, caractérisé en ce que l'élément isolant du témoin d'usure est prolongé par un doigt (11) qui est engagé dans une échancrure (12) prévue sur le bord de la plaque de support (3), ledit doigt présentant à son extrémité un bossage (13) s'étendant à l'intérieur du piston creux (5) et qui est en appui contre la plaquette de support (3) de telle sorte que ledit bossage (13) est verrouillé en hauteur par la face intérieure de l'alésage central (7) du piston (5).

3. Dispositif suivant les revendications 1 et 2, caractérisé en ce que le témoin d'usure (9) est engagé dans un logement (8) prévu dans le bord de la garniture de friction (2).

## Patentansprüche

1. Vorrichtung zur Verschleißanzeige von Scheibenbremsbelägen,

— bei denen wenigstens eine der Tragplatten eines Reibbelags an der einen der Flächen eines die Beläge betätigenden hohlen Kolbens (5) anliegt,
— wobei die Vorrichtung einen Verschleißanzeiger aufweist, der aus einem Element (9) aus Isoliermaterial besteht, in dem ein mit dem elektrischen Signalkreis verbundener Leiter (10) eingebettet ist,
— wobei das Element (9) aus Isoliermaterial des Verschleißanzeigers an der Platte (3) anliegt und durch ein Verriegelungsorgan (11, 13) verlängert ist, das zwischen dem Kolben (5) und der Tragplatte (3) angeordnet ist,
— wobei das Organ eine axiale und senkrechte Verriegelung des Elements (9) gewährleistet,

dadurch gekennzeichnet,

— daß das Element aus Isoliermaterial an der auf der Seite des Reibbelags (2) gelegenen Fläche der Tragplatte (3) anliegt und
— daß das Verriegelungsorgan (11, 13) zwischen der Innenfläche der zentralen Bohrung (7) des hohlen Kolbens (5) und dem oberen Rand der Tragplatte (3) angeordnet ist.

2. Vorrichtung nach Anspruch 1, dadurch gekennzeichnet,

— daß das isolierende Element des Verschleißanzeigers durch einen Finger (11) verlängert ist, der in eine Ausnehmung (12) am Rand der Tragplatte (3) eingesetzt ist,
— wobei der Finger an seinem Ende einen Vorsprung (13) aufweist, der sich in das Innere des hohlen Kolbens (5) erstreckt und der an der Tragplatte (3) derart anliegt, daß der Vorsprung (13) in der Höhe durch die Innenfläche der zentralen Bohrung (7) des Kolbens (5) verriegelt ist.

3. Vorrichtung nach Anspruch 1 und 2, dadurch gekennzeichnet,

— daß der Verschleißanzeiger (9) in einen Sitz (8) am Rand des Reibbelags (2) eingesetzt ist.

## Claims

1. Wear indicator device for the pads (2, 2a) of disc brakes in which at least one of the back pads (3) of a friction pad is in resting contact against one of the faces of a hollow piston (5) actuating said friction pads, the said device comprising a wear indicator constituted of an element (9) in insulating material in which is embedded a conducting member (10) connected to the electrical signalling circuit, said element (9) in insulating material of the wear indicator being in resting contact against back pad (3) and being extended by a locking member (11, 13) placed between the piston (5) and back pad (3), said member ensuring an axial and vertical locking of said element (9) characterized in that said element (9) in insulating material is in resting contact against the face of back pad (3) situated on the side of the friction pad (2) and in that said locking member (11, 13) is placed between the inner face of the central bore (7) of hollow piston (5) and the upper edge of the back pad (3).

2. Device according to claim 1, characterized in that the insulating element of the wear indicator is extended by a finger (11) which is engaged in a notch (12) provided on the edge of the back pad (3), said finger being provided at its end with a boss (13) which extends inside hollow piston (5) and which is in resting contact against said back pad (3) so that said boss (13) is locked height-wise by the inner face of the central bore (7) of piston (5).

3. Device according to claims 1 and 2, characterized in that the wear indicator (9) is engaged in a housing (8) provided in the edge of the friction pad (2).

**0 054 480**

Fig.1

Fig.2

Fig.3